(19) Europäisches Patentamt

European Patent Office

Office européen des brevets

(11) **EP 0 939 868 B1**

(12) **EUROPÄISCHE PATENTSCHRIFT**

(45) Veröffentlichungstag und Bekanntmachung des Hinweises auf die Patenterteilung:
**01.08.2001 Patentblatt 2001/31**

(51) Int Cl.⁷: **F16H 61/06**

(21) Anmeldenummer: **97951211.8**

(86) Internationale Anmeldenummer:
**PCT/EP97/06386**

(22) Anmeldetag: **15.11.1997**

(87) Internationale Veröffentlichungsnummer:
**WO 98/23884 (04.06.1998 Gazette 1998/22)**

(54) **ERHÖHUNG DER SPONTANITÄT EINES AUTOMATGETRIEBES**

INCREASING THE SPONTANEITY OF AN AUTOMATIC GEAR BOX

AUGMENTATION DE LA SPONTANEITE D'UNE BOITE DE VITESSES AUTOMATIQUE

(84) Benannte Vertragsstaaten:
**DE FR GB**

(30) Priorität: **22.11.1996 DE 19648383**

(43) Veröffentlichungstag der Anmeldung:
**08.09.1999 Patentblatt 1999/36**

(73) Patentinhaber: **ZF FRIEDRICHSHAFEN Aktiengesellschaft**
**88038 Friedrichshafen (DE)**

(72) Erfinder:
• **POPP, Christian**
  **D-88079 Kressbronn (DE)**
• **TENBROCK, Friedrich**
  **D-88085 Langenargen (DE)**
• **ROSI, Hansjörg**
  **D-88074 Meckenbeuren (DE)**

(56) Entgegenhaltungen:
**EP-A- 0 435 375          US-A- 5 376 056**
**US-A- 5 558 597**

**Beschreibung**

Die Erfindung betrifft ein Verfahren zur Erhöhung der Spontanität eines elektro-hydraulisch gesteuerten Automatgetriebes, bei dem eine Schaltung von einer ersten Übersetzungsstufe in eine zweite Übersetzungsstufe im Sinne einer Rückschaltung ausgeführt wird, indem eine erste Kupplung öffnet und eine zweite Kupplung schließt.

Bei Automatgetrieben sind die Schaltungen üblicherweise als Überschneidungsschaltungen, d. h. eine erste Kupplung öffnet und eine zweite Kupplung schließt, ausgeführt. So schlägt z. B. die US 5 079 970 für eine Überschneidungsschaltung im Sinne einer Rückschaltung vor, daß das Druckniveau der ersten Kupplung mit Schaltungsbeginn gemäß einer Rampenfunktion auf ein niedriges Druckniveau geführt wird. Daran schließt sich eine weitere Zeitfunktion an, während der die Getriebeeingangsdrehzahl sich vergrößert. Der Druckverlauf der zweiten, also zuschaltenden Kupplung, besteht aus einer Schnellfüll-, Füllausgleichs- und einer Lastübernahmephase. Üblicherweise werden Rückschaltungen ausgelöst, wenn ein vom Fahrer vorgebbarer Fahrpedalwert eine Rückschalt-Kennlinie überschreitet. Neben diesen mittels Fahrpedal ausgelösten Rückschaltungen hat ein Fahrer auch die Möglichkeit, zu jedem beliebigen Zeitpunkt manuelle Rückschaltungen auszulösen. So zeigt z. B. die DE-OS 43 11 886 eine Vorrichtung, durch die ein Fahrer mittels eines Wählhebels mit einer manuellen Gasse bzw. Schaltwippen am Lenkrad Schaltungen auslösen kann. In der Praxis ergibt sich nunmehr für z. B. manuell angeforderte Rückschaltungen auf einem niedrigen Drehzahlniveau das Problem von langen Reaktionszeiten, d. h. dem Zeitraum von manueller Rückschaltungsanforderung, bis eine spürbare Reaktion des Automatgetriebes eintritt. Lange Reaktionszeiten ergeben sich aus den Signallaufzeiten bzw. Totzeiten der Hydraulik, Sperrzeiten zwischen zwei aufeinanderfolgenden Schaltungen und der für den Abschaltvorgang der ersten Kupplung bzw. Füllvorgang der zweiten Kupplung notwendigen Zeit. Ein Fahrer empfindet hierbei lange Reaktionszeiten als unangenehm.

Der Erfindung liegt insofern als Aufgabe zugrunde, die Spontanität eines Automatgetriebes, insbesondere bei einer Rückschaltung und Doppelschaltung mit darin ausgeführter Rückschaltung, zu verbessern.

Die Aufgabe wird erfindungsgemäß gelöst, indem mit Ausgabe des Schaltbefehls das Druckniveau der ersten Kupplung von einem ersten Druckniveau auf ein zweites Druckniveau reduziert und das zweite Druckniveau während einer Haltezeit beibehalten wird, wobei diese eine Funktion einer Drehzahldifferenz einer Getriebeeingangsdrehzahl und einer Temperatur des Hydraulikfluids darstellt. Mit Ablauf der Haltezeit wird das Druckniveau der ersten Kupplung auf ein drittes Druckniveau für eine Regelzeit reduziert. Dieses dritte Druckniveau bestimmt hierbei den Getriebeeingangsdrehzahl-Verlauf. Mit Ablauf der Regelzeit wird sodann das Druckniveau der ersten Kupplung auf Null verringert.

Die erfindungsgemäße Lösung bietet den Vorteil einer variablen Haltezeit. Über diese Haltezeit wird die Reaktionszeit maßgeblich bestimmt. Die Haltezeit ist hierbei gemäß Anspruch 2 derart ausgeführt, daß bei einem kleinen Drehzahlsprung der Getriebeeingangsdrehzahl eine lange Haltezeit und bei einem großen Sprung der Getriebeeingangsdrehzahl eine sehr kurze Haltezeit ausgegeben wird.

Der Drehzahlsprung der Getriebeeingangsdrehzahl wird hierbei gemäß Anspruch 3 aus dem Getriebeeingangsdrehzahl-Wert zu Beginn der Schaltung in der ersten Übersetzungsstufe und dem Getriebeeingangsdrehzahl-Wert im Synchronpunkt der zweiten Übersetzungsstufe errechnet.

Um das Verfahren bei sequentiell ausgeführten Doppelschaltungen zu verwenden, wird erfindungsgemäß weiter vorgeschlagen, daß bei Doppelschaltungen, die aus einer ersten Schaltung und einer zweiten Schaltung bestehen, wobei die zweite Schaltung einer Rückschaltung entspricht, für die zweite Schaltung der Schaltübergang gemäß Anspruch 1 ausgeführt wird.

In einer Ausgestaltung hierzu wird vorgeschlagen, daß bei einer Doppelschaltung, deren erste Schaltung einer Hochschaltung von einer ersten in eine zweite Übersetzungsstufe entspricht, mit Abschalten der ersten Kupplung eine Zeitstufe gestartet wird. Diese Zeitstufe läuft bis zu einer maximalen Zeit, wobei jedem Wert der Zeitstufe eine Reduktionszeit zugeordnet ist. Gemäß Anspruch 6 bestimmt die Reduktionszeit sodann eine Schnellfüllzeit der bei der Rückschaltung zuschaltenden Kupplung.

Diese Lösung bietet den Vorteil, daß Sperrzeiten zwischen der Hochschaltung und der Rückschaltung entfallen. Diese Sperrzeiten waren notwendig, da die bei der Hochschaltung abschaltende Kupplung bei der darauffolgenden Rückschaltung wieder befüllt wird, so daß eine sichere Entleerung zuvor garantiert sein mußte.

In den Zeichnungen ist ein Ausführungsbeispiel dargestellt.

Es zeigen:

Fig. 1         ein System-Schaubild;

Fig. 2         ein Zeit-Diagramm für eine Rückschaltung und

Fig. 3 und 4         ein Zeit-Diagramm für eine Doppelschaltung.

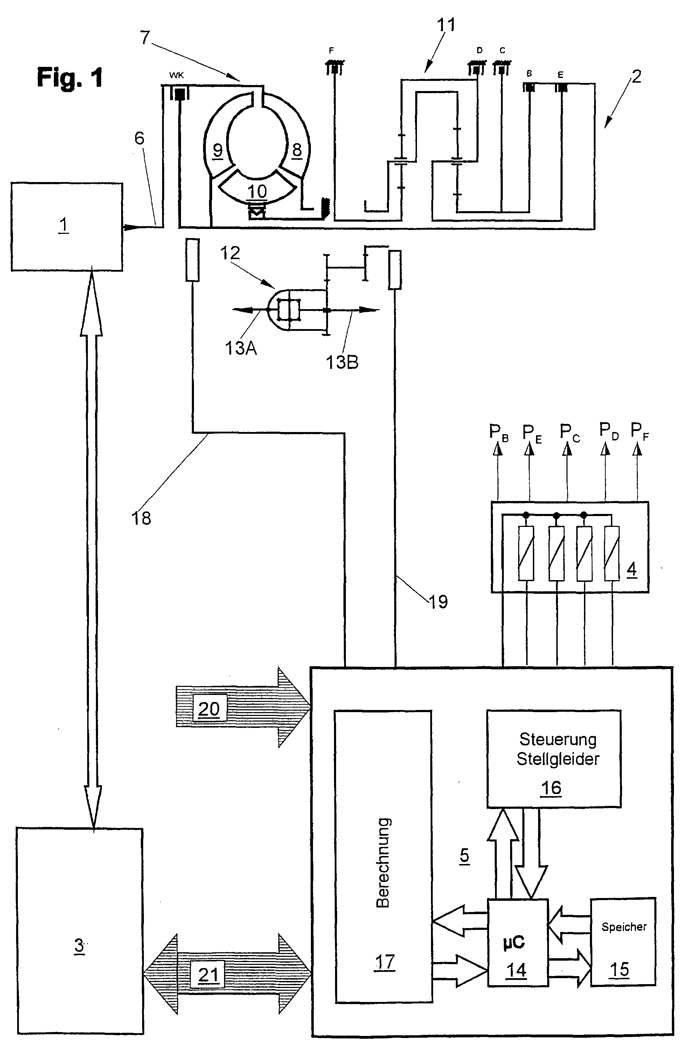

Fig. 1 zeigt ein System-Schaubild eines Automatgetriebes. Das Automatgetriebe 2 besteht aus einem hydrodynamischen Wandler 7, einem zusammengesetzten Planetenschaltgetriebe 11 mit Differential 12, einem hydraulischen Steuergerät 4 und einer elektronischen Getriebesteuerung 5.

Eine Brennkraftmaschine 1 treibt über eine Antriebswelle 6 das Automatgetriebe 2 an. Ein elektronisches Motorsteuergerät 3 steuert oder regelt die Brennkraftmaschine 1. Die Antriebswelle 6 ist drehfest mit dem hydrodynamischen Wandler 7 verbunden und treibt dessen Pumpenrad 8 an. Bekanntermaßen besteht der hydrodynamische Wandler 7 aus dem Pumpenrad 8, einem Turbinenrad 9 und einem Leitrad 10. Parallel zum hydrodynamischen Wandler 7 ist eine Wandlerüberbrückungskupplung ohne Bezugszeichen dargestellt. Bei betätigter Wandlerüberbrückungskupplung dreht sich die Turbinenwelle mit der gleichen Drehzahl wie die Antriebswelle 6. Das zusammengesetzte Planetenschaltgetriebe 11 besteht aus zwei Planetenradpaaren und den Kupplungen bzw. Bremsen B bis F. Der Abtrieb geschieht über das Differential 12 und die beiden Achshalbwellen 13A und 13B. Da der mechanische Teil zum weiteren Verständnis der Erfindung nicht relevant ist, wird auf eine detaillierte Beschreibung verzichtet. Die Kupplungen und Bremsen B bis F werden von der elektronischen Getriebesteuerung 5 über das hydraulische Steuergerät 4 gesteuert oder geregelt. Die Schaltungen, d. h. die Hoch- und Rückschaltungen des Automatgetriebes 2, sind hierbei als Überschneidungsschaltungen ausgeführt, indem eine erste Kupplung öffnet und eine zweite Kupplung schließt. Im hydraulischen Steuergerät 4 befinden sich elektromagnetische Stellglieder und hydraulische Nachfolgeschieber.

Vom elektronischen Steuergerät 5 sind in stark vereinfachter Form die Funktionsblöcke Micro-Controler 14, Speicher 15, Funktionsblock Steuerung Stellglieder 16 und Funktionsblock Berechnung 17 dargestellt. Der Speicher 15 ist üblicherweise als EPROM, EEPROM oder als gepufferter RAM ausgeführt. Im Speicher 15 sind die getrieberelevanten Daten abgelegt. Der Funktionsblock Steuerung Stellglieder 16 dient der Ansteuerung der elektromagnetischen Stellglieder im hydraulischen Steuergerät 4. Der Funktionsblock Berechnung 17 dient der Berechnung der schaltungsrelevanten Daten. Diese werden aus den Eingangsgrößen 18 bis 21 bestimmt. Eingangsgrößen 20 sind z. B. das Signal eines Wählhebels, das Signal von Tipptasten, die Drehzahl der Brennkraftmaschine, das Signal einer Fahrpedal- oder Drosselklappenstellung, die Temperatur des Hydraulikfluids usw. Das elektronische Motorsteuergerät 3 und das elektronische Steuergerät 5 stehen über eine Datenleitung 21 miteinander in Verbindung. Diese Datenleitung 21 kann als Eindraht-Schnittstelle ausgeführt sein, um z. B. einen Motoreingriff durchzuführen. Daneben kann die Datenleitung 21 auch als bidirektionale Datenleitung für ein Bussystem, z. B. CAN-Bus, ausgeführt sein. Zusätzliche Eingangsgrößen für das Steuergerät 5 sind die Getriebeeingangsdrehzahl 18, also die Drehzahl der Turbinenwelle, und die Getriebeausgangsdrehzahl 19.

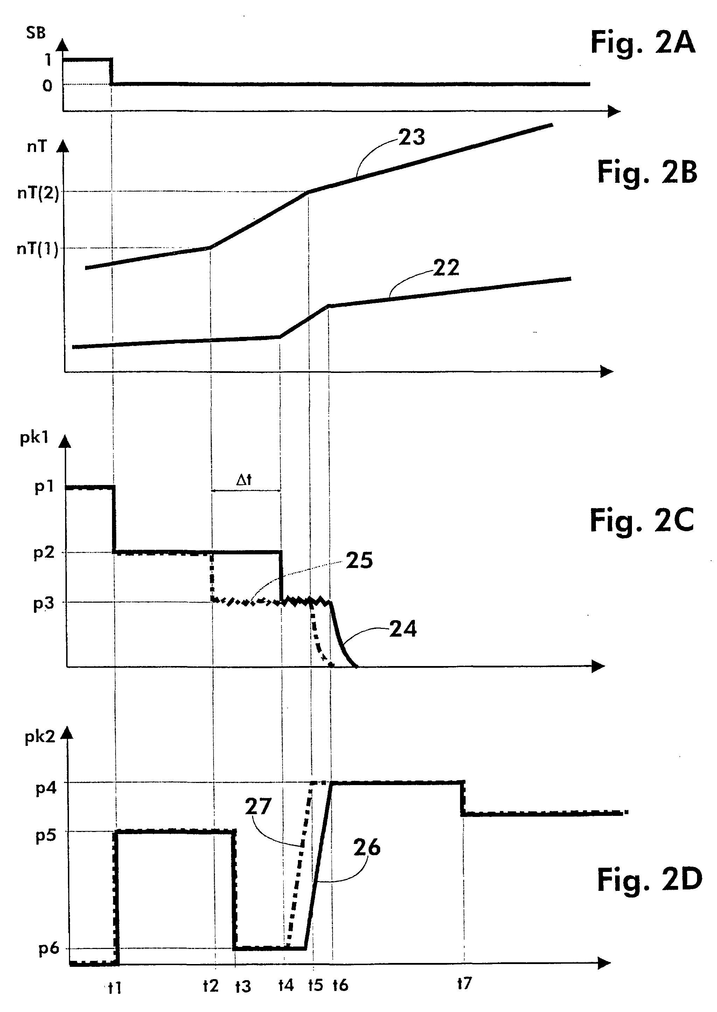

Die Fig. 2 besteht aus den Teil-Fig. 2A bis 2D. Dargestellt ist eine Schaltung von einer ersten in eine zweite Übersetzungsstufe im Sinne einer Rückschaltung. Es zeigen hierbei jeweils über der Zeit: Fig. 2A ein Zustands-Diagramm für den Schaltbefehl, Fig. 2B einen Drehzahlverlauf nT der Getriebeeingangsdrehzahl, Fig. 2C einen Druckverlauf pK1 einer ersten, der abschaltenden Kupplung und in Fig. 2D den Druckverlauf pK2 einer zweiten, der zuschaltenden Kupplung. In Fig. 2B, 2C und 2D sind jeweils zwei Beispiele darstellt. Fig. 2B zeigt mit Bezugszeichen 22 eine Rückschaltung, beginnend auf einem niedrigen Drehzahlniveau. Zu diesem ersten Beispiel gehört in Fig. 2C mit Bezugszeichen 24 der Druckverlauf pK1 der ersten Kupplung und in Fig. 2D mit Bezugszeichen 26 der Druckverlauf pK2 der zweiten Kupplung. Zum zweiten Beispiel in Fig. 2B mit dem Bezugszeichen 23 gehört in Fig. 2C der Druckverlauf pK1 der ersten Kupplung mit Bezugszeichen 25 und in Fig. 2D der Druckverlauf pK2 der zweiten Kupplung mit Bezugszeichen 27.

Zum ersten Beispiel:

Im Zeitpunkt t1 wird ein Schaltbefehl ausgegeben, d. h. in Fig. 2A ändert sich der Zustand des Signals von Eins nach Null. Mit Ausgabe des Schaltbefehls ändert sich das Druckniveau pK1 der ersten Kupplung von einem ersten Druckniveau pl nach einem Druckniveau p2. Ebenfalls zum Zeitpunkt t1 wird die zweite Kupplung mit einem hohen Druckniveau p5, dem Schnellfülldruck, beaufschlagt. Dieser ist zum Zeitpunkt t3 beendet. Danach wird die zweite Kupplung mit einem Fülldruck p6 befüllt. Zum Zeitpunkt t4 ist eine Haltezeit der ersten Kupplung, welche beim Zeitpunkt t1 beginnt, beendet. Nach Ende der Haltezeit zum Zeitpunkt t4 wird das Druckniveau pK1 der ersten Kupplung vom zweiten Druckniveau p2 auf ein drittes Druckniveau p3 verringert. Hierdurch ändert sich der Verlauf der Getriebeeingangsdrehzahl nT. Zum Zeitpunkt t6 hat die Getriebeeingangsdrehzahl nT den Synchronpunkt erreicht. Im Synchronpunkt übernimmt die zweite Kupplung die Last von der ersten Kupplung, d. h. das Druckniveau der ersten Kupplung wird auf Null verringert, während das Druckniveau der zweiten Kupplung vom Fülldruck auf den Wert p4 erhöht wird. Zum Zeitpunkt t7 ist die Schaltung beendet, d. h. das Druckniveau pK2 der zweiten Kupplung geht auf ein Druckniveau außerhalb der Schaltung.

Zum zweiten Beispiel:

Im Zeitpunkt t1 wird der Schaltbefehl ausgegeben, das Signal ändert sich in Fig. 2A von Eins nach Null. Gleichzeitig wird das Druckniveau der ersten Kupplung pK1 von einem ersten Niveau p1 auf ein zweites Niveau p2 verringert. Ebenfalls zum Zeitpunkt t1 wird die zweite Kupplung mit dem Schnellfülldruck p5 beaufschlagt. Der Schnellfülldruck wird bis zum Zeitpunkt t3 beibehalten, danach wird die zweite Kupplung mit dem Fülldruck p6 befüllt. Zum Zeitpunkt t2 ist die Haltezeit der ersten Kupplung abgelaufen. Mit Ende der Haltezeit wird das Druckniveau pK1 der ersten Kupplung vom zweiten Druckniveau p2 nach dem dritten Druckniveau p3 geführt. Als Folge dessen ändert sich der Verlauf der Getriebeeingangsdrehzahl nT aus Fig. 2B. Zum Zeitpunkt t5 ist die Synchrondrehzahl des neuen Ganges erreicht. In Fig. 2B ist dieser Synchrondrehzahlwert auf der Ordinate als nT(2) bezeichnet. Am Synchronpunkt übernimmt die zweite Kupplung die Last von der ersten Kupplung. Das Druckniveau pK1 der ersten Kupplung wird somit auf Null reduziert, während das Druckniveau der zweiten Kupplung pK2 auf das Druckniveau p4 erhöht wird. Zum Zeitpunkt t7 ändert sich das Druckniveau pK2 der zweiten Kupplung auf einen Druckwert außerhalb der Schaltung.

Im ersten Beispiel dauert die Haltezeit von t1 bis t4. Im zweiten Beispiel dauert die Haltezeit von t1 bis t2. Diese Haltezeit ist variabel ausgeführt. Eingangsgrößen dieser Haltezeit sind eine Drehzahldifferenz d_nT der Getriebeeingangsdrehzahl nT und eine Temperatur des Hydraulikfluids $\Theta$, so daß gilt: tHALT = f (d_nT, $\Theta$)
Die Drehzahldifferenz d_nT berechnet sich aus der Differenz der Getriebeeingangsdrehzahl im ersten und zweiten Synchronpunkt. Für das zweite Beispiel ergibt sich die Drehzahldifferenz somit zu: d_nT = nT(2) - nT(1)

Alternativ kann in einer einfacheren Ausführungsform die Haltezeit auch nur in Abhängigkeit der Getriebeeingangsdrehzahl im ersten Synchronpunkt nT(1) oder im zweiten Synchronpunkt nT(2) bestimmt werden.
Es gilt somit:

$$tHALT = f(nT(1), \Theta)$$

oder

$$tHALT = f(nT(2), \Theta)$$

Wie in Fig. 2 dargestellt, ergibt sich somit für das Beispiel 2 ein Zeitvorteil von $\Delta t$ gegenüber dem Beispiel 1. Dieser Zeitvorteil bewirkt, daß ein Fahrer, nachdem er eine Rückschaltung veranlaßt hat, schneller eine Reaktion des Automatgetriebes spürt; mit anderen Worten: er empfindet das Verhalten des Automatgetriebes spontaner.

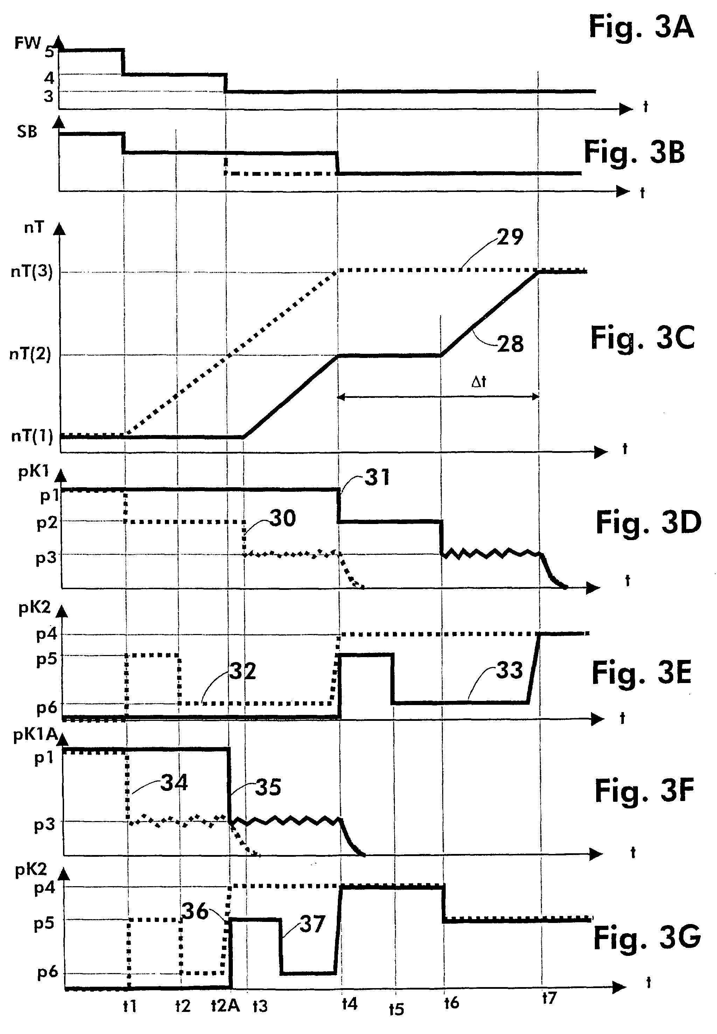

In Fig. 3 ist eine Anwendung des in Fig. 2 beschriebenen Verfahrens für eine Doppelschaltung dargestellt. Diese Doppelschaltung besteht aus einer ersten und zweiten, sequentiell ausgeführten Schaltung. Sowohl die erste als auch die zweite Schaltung sind Rückschaltungen, also z. B. eine Doppelschaltung vom fünften in den dritten Gang. Die Fig. 3 besteht aus den Teil-Fig. 3A bis 3G. Hierbei zeigen jeweils über der Zeit:

Fig. 3A     den Leistungswunsch FW des Fahrers;

Fig. 3B     den Schaltbefehl SB;

Fig. 3C     den Verlauf der Getriebeeingangsdrehzahl nT in zwei Beispielen (Bezugszeichen 28, 29);

Fig. 3D     den Druckverlauf pK1 der beiden ersten, also abschaltenden Kupplungen für das erste Beispiel;

Fig. 3E     den Druckverlauf pK2 der beiden zweiten, also zuschaltenden Kupplungen für das erste Beispiel;

Fig. 3F     den Druckverlauf pK1A für die beiden ersten Kupplungen des zweiten Beispiels und

Fig. 3G     den Druckverlauf pK2A für die beiden zweiten Kupplungen des zweiten Beispiels.

In Fig. 3C zeigt mit Bezugszeichen 28 ein erstes Beispiel eine Doppelrückschaltung gemäß dem Stand der Technik. Zu diesem Drehzahlverlauf nT gehören die Druckverläufe gemäß den Fig. 3D und 3E. Wie man erkennt, sind an dieser Doppel-Rückschaltung insgesamt vier Kupplungen beteiligt. Mit Bezugszeichen 29 in Fig. 3C ist ein zweites Beispiel dargestellt. Dieses Beispiel entspricht der erfindungsgemäßen Lösung. Zu dem Drehzahlverlauf nT gemäß Bezugszeichen 29 gehören die Druckverläufe gemäß den Fig. 3F und 3G.

Zum ersten Beispiel:

Zum Zeitpunkt t1 gibt ein Fahrer einen Wunsch zu einer ersten Rückschaltung aus. In Fig. 3A und 3B ändert sich dadurch der Signalverlauf. Gleichzeitig wird das Druckniveau pK1 der ersten Kupplung der ersten Rückschaltung, Bezugszeichen 30, vom ersten Druckniveau pl auf das zweite Druckniveau p2 reduziert. Dieses wird während der Haltezeit, also dem Zeitpunkt t1 bis t3, beibehalten. Ebenfalls zum Zeitpunkt t1 wird die zweite Kupplung, Bezugszeichen 32, mit dem Schnellfülldruck p5 beaufschlagt. Der Schnellfülldruck dauert bis zum Zeitpunkt t2. Danach wird die zweite Kupplung mit dem Fülldruck p6 befüllt. Zum Zeitpunkt t3 ist die Haltezeit abgelaufen, d. h. das Druckniveau pK1 der ersten Kupplung wird vom zweiten Druckniveau p2 auf das dritte Druckniveau p3 verringert. Dadurch ändert sich der Verlauf der Getriebeeingangsdrehzahl nT von nT(1) in Richtung nT(2). Über das Druckniveau p3 der ersten Kupplung läßt sich der Gradient der Getriebeeingangsdrehzahl bestimmen. Im Zeitpunkt t4 ist der Synchrondrehzahlwert nT(2) erreicht. Im Synchronpunkt hat das Druckniveau pK2 der zweiten Kupplung das Druckniveau p4 erreicht. Da nunmehr die zweite Kupplung die Last von der ersten Kupplung übernommen hat, wird das Druckniveau p3 der ersten Kupplung auf Null verringert.

Es wird nun davon ausgegangen, daß im Zeitbereich t2 bis t4 der Fahrer eine zweite Rückschaltung veranlaßt. Dies ist in Fig. 3A dadurch dargestellt, daß sich der Signalpegel des Fahrerwunsches FW von "4" nach "3" ändert. Im Zeitpunkt t4 wird mit Erkennen des Synchronpunktes nT(2) somit ein neuer Schaltbefehl ausgegeben, wie dies in Fig. 3B ersichtlich ist. Im Zeitpunkt t4 wird ebenfalls das Druckniveau pK1 der zweiten abschaltenden Kupplung vom Druckniveau pl auf das Druckniveau p2 verringert. Gleichzeitig wird das Druckniveau pK2 der zweiten zuschaltenden Kupplung auf das Schnellfülldruckniveau p5 für die Dauer t4 bis t5 gebracht. Danach wird die zweite zuschaltende Kupplung mit dem Fülldruck p6 befüllt. Während des Zeitraumes t4 bis t6 läuft die Haltezeit der ersten Kupplung, Bezugszeichen 31. Während dieser Haltezeit verändert sich der Verlauf der Getriebeeingangsdrehzahl nT nicht, d. h., die Drehzahl bleibt statisch bei dem Drehzahlwert nT (2). Zum Zeitpunkt t6 ist die Haltezeit abgelaufen, d. h. das Druckniveau pK1 der ersten Kupplung wird vom zweiten Druckniveau p2 auf das dritte Druckniveau p3 verringert. Hierdurch ändert sich der Verlauf der Getriebeeingangsdrehzahl nT vom Wert nT(2) in Richtung nT (3). Zum Zeitpunkt t7 ist der Synchronpunkt, Drehzahlwert nT(3), in Fig. 3C erreicht. Im Synchronpunkt übernimmt die zweite zuschaltende Kupplung gemäß Fig. 3E die Last von der ersten Kupplung. Gleichzeitig wird die erste Kupplung vom dritten Druckniveau p3 nach Null geführt.

Zum zweiten Beispiel:

Im zweiten Beispiel ist die erfindungsgemäße Lösung dargestellt. Das zweite Beispiel umfaßt in Fig. 3C im Drehzahlverlauf der Getriebeeingangsdrehzahl nT gemäß dem Bezugszeichen 29 die Druckverläufe der beiden abschaltenden Kupplungen, Bezugszeichen 34 und 35 in Fig. 3F und die Druckverläufe der beiden zuschaltenden Kupplungen; Bezugszeichen 36 und 37 in Fig. 3G.

Zum Zeitpunkt t1 initiiert ein Fahrer eine Rückschaltung, z. B. vom fünften in den vierten Gang, wie dies in Fig. 3A dargestellt ist. Dadurch wird ein Schaltbefehl, siehe Fig. 3B, ausgegeben. Zum Zeitpunkt t1 wird das Druckniveau pK1A der ersten abschaltenden Kupplung, Bezugszeichen 34, vom ersten Druckniveau p1 auf das dritte Druckniveau p3 verringert. Bei dem vorliegenden Beispiel ist somit davon ausgegangen worden, daß sich die Haltezeit zu Null berechnet hat. Die Haltezeit ist eine Funktion der Drehzahldifferenz der Getriebeeingangsdrehzahl d_nT und der Temperatur Θ des Hydraulikmediums. Die Differenz der Getriebeeingangsdrehzahl entspricht bei diesem Beispiel der Differenz der beiden Synchronpunkte nT(2) und nT(1). Sobald das Druckniveau pK1A der ersten abschaltenden Kupplung das dritte Druckniveau p3 erreicht hat, ändert sich der Gradient der Getriebeeingangsdrehzahl nT in Richtung Drehzahlwert nT(2). Der Druckwert p3 wird bis zum Zeitpunkt t2A beibehalten. Über das Druckniveau p3 wird der Getriebeeingangsdrehzahl-Verlauf bestimmt. Ebenfalls zum Zeitpunkt t1 wird die erste zuschaltende Kupplung, Bezugszeichen 36, mit Schnellfülldruck, Druckniveau p5, bis zum Zeitpunkt t2 beaufschlagt. Danach wird diese mit dem Fülldruck p6 befüllt. Zum Zeitpunkt t2A ist die Synchrondrehzahl nT(2) erreicht. In diesem Punkt übernimmt die erste zuschaltende Kupplung die Last von der ersten abschaltenden Kupplung. Das Druckniveau der ersten abschaltenden Kupplung wird vom dritten Druckniveau p3 auf Null reduziert. Gleichzeitig mit Erkennen der Synchrondrehzahl nT(2) wird die zweite abschaltende Kupplung, Bezugszeichen 35, vom ersten Druckniveau p1 auf das dritte Druckniveau p3 reduziert. Hier entfällt ebenfalls die Haltezeit, da diese zu Null berechnet wurde. Danach folgt mit Druckniveau p3 die Regelphase, während der der Verlauf der Getriebeeingangsdrehzahl in Richtung nT(3) sich ändert. Ebenfalls im Zeitpunkt t2A wird die zweite zuschaltende Kupplung, Bezugszeichen 37, mit Schnellfülldruck beaufschlagt, gefolgt vom Fülldruck p6. Zum Zeitpunkt t4 ist der zweite Synchronpunkt nT(3) erreicht. Bei diesem Synchrondrehzahlwert übernimmt die zweite zuschaltende Kupplung die Last von der zweiten abschaltenden Kupplung. Die zweite abschaltende Kupplung wird vom dritten Druckniveau p3 auf Null reduziert. Wie aus den Fig. 3A und 3B ersichtlich, wird aufgrund der Anforderung des Fahrer nach einer weiteren Rückschaltung, Zeitpunkt t2A, unmittelbar der Schaltbefehl ausgegeben.

Wie in Fig 3C dargestellt, ergibt sich somit für die beiden Beispiele ein Zeitversatz Δt vom Zeitpunkt t4 bis zum Zeitpunkt t7; mit anderen Worten: gegenüber dem Drehzahlverlauf gemäß dem Stand der Technik, Bezugszeichen 28, ergibt die Anwendung des erfindungsgemäßen Verfahrens den Drehzahlverlauf gemäß dem Bezugszeichen 29. Zwischen der Anforderung des Fahrers nach einer Doppelrückschaltung und dem Erreichen des Synchrondrehzahlwertes nT(3) ergeht somit gemäß dem Verlauf Bezugszeichen 29 eine geringere Zeit, d. h. die Reaktionszeit wurde eindeutig verkürzt; der Fahrer empfindet eine spontane Reaktion.

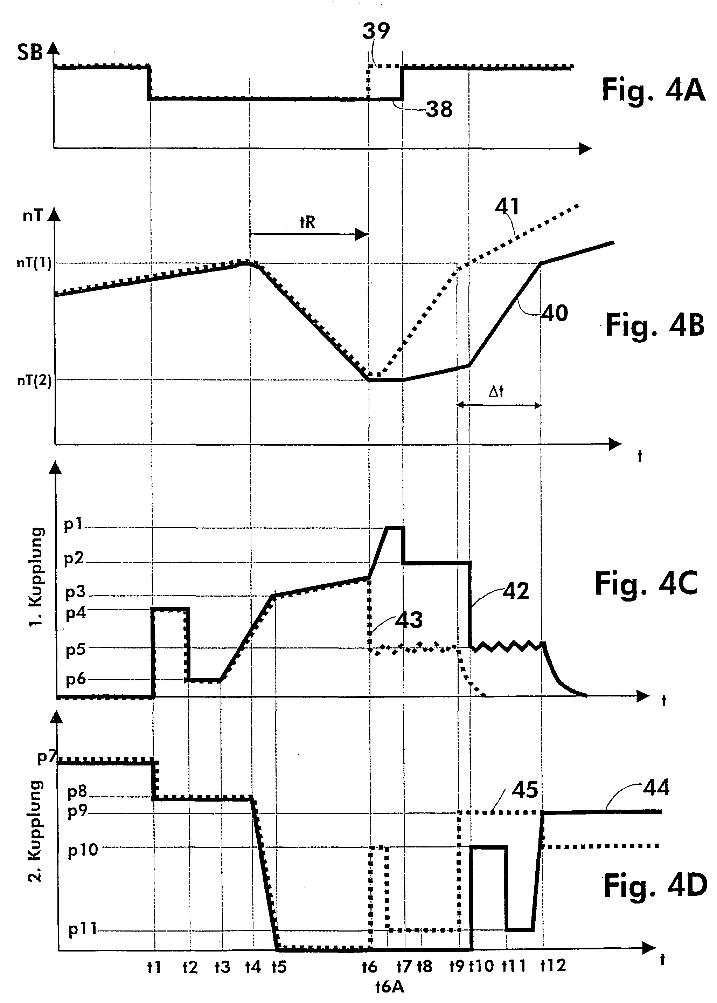

In Fig. 4 ist eine Doppelschaltung dargestellt, bestehend aus einer Hochschaltung und daran sich anschließender Rückschaltung. Ein typisches Beispiel aus der Praxis wäre, wenn ein Fahrer hinter einem Lkw fährt und beabsichtigt, zu überholen. Aufgrund des Gegenverkehrs verringert er die Fahrpedalstellung, so daß das Automatgetriebe hochschaltet, z. B. von der vierten in die fünfte Gangstufe. Während die Hochschaltung abläuft, erkennt der Fahrer, daß die Gegenfahrbahn nun frei ist und betätigt erneut das Gaspedal. In diesem Fall wird gemäß dem Stand der Technik zuerst die Hochschaltung vollständig ausgeführt. Danach kommt üblicherweise eine Sperrzeit und erst dann wird die Rückschaltung hier aus der fünften in die vierte Gangstufe begonnen. Die Sperrzeit ist deswegen notwendig, weil gewährleistet sein muß, daß die beim Hochschaltvorgang abschaltende Kupplung vollständig entleert ist. Ist dies nicht der Fall, so macht sich die Schnellfüllung der jetzt zuschaltenden Kupplung bei der Rückschaltung negativ in Form eines Schaltrucks bemerkbar.

Die Fig. 4 besteht aus den Teil-Fig. 4A bis 4D. Es zeigen hierbei jeweils über der Zeit:

Fig. 4A   den Schaltbefehl;

Fig. 4B   den Drehzahlverlauf der Getriebeeingangsdrehzahl nT;

Fig. 4C   den Druckverlauf einer ersten Kupplung und

Fig. 4D   den Druckverlauf einer zweiten Kupplung.

In Fig. 4B sind wieder zwei Beispiele dargestellt. Der Drehzahlverlauf mit dem Bezugszeichen 40 entspricht hierbei einer Lösung gemäß dem Stand der Technik. Zu diesem Drehzahlverlauf gehört mit Bezugszeichen 38 die Ausgabe des Schaltbefehls gemäß Fig. 4A, der Druckverlauf der ersten Kupplung gemäß Bezugszeichen 42 und der Druckverlauf der zweiten Kupplung in Fig. 4D mit dem Bezugszeichen 44.

Das zweite Beispiel in Fig. 4B mit dem Bezugszeichen 41 zeigt einen Drehzahlverlauf nT gemäß der Erfindung. Zu diesem Drehzahlverlauf gehört in Fig. 4A, Bezugszeichen 39, der Schaltbefehl, in Fig. 4C der Druckverlauf der ersten Kupplung mit Bezugszeichen 43 und der Druckverlauf der zweiten Kupplung in Fig. 4D mit dem Bezugszeichen 45.

Zum Zeitpunkt t1 wird ein Schaltbefehl zum Hochschalten ausgegeben. Gleichzeitig wird die erste Kupplung mit dem Schnellfülldruck, Druckniveau p4, für den Zeitraum t1 bis t2 befüllt. Im Zeitraum t2 bis t3 wird diese dann mit Fülldruck, Druckniveau p6, befüllt. Danach folgt für den Zeitraum t3 bis t5 eine Druckerhöhung gemäß einer Geradenfunktion. Endpunkt ist hierbei das Druckniveau p3. Ebenfalls zum Zeitpunkt t1 wird das Druckniveau der zweiten Kupplung vom Wert p7 auf Druckniveau p8 verringert. Dieses Druckniveau wird bis zum Zeitpunkt t4 beibehalten. Da die erste Kupplung im Zeitbereich t3 bis t5 beginnt, die Last von der zweiten Kupplung zu übernehmen, kann die zweite Kupplung zum Zeitpunkt t4 abgeschaltet werden. Als Folge der Lastübernahme beginnt sich die Getriebeeingangsdrehzahl nT vom Synchronpunkt nT(1) in Richtung des neuen Synchronpunktes nT(2) zu ändern. Zum Zeitpunkt t6 ist der Drehzahlwert nT(2) erreicht, die Hochschaltung ist somit abgeschlossen. Anschließend wird das Druckniveau der ersten Kupplung auf das Druckniveau p1 erhöht.

Betätigt nun der Fahrer während der Hochschaltung, Zeitraum t1 bis t6, das Fahrpedal und wünscht eine Rückschaltung, so läuft gemäß dem Stand der Technik zunächst nun eine Sperrzeit vom Zeitraum t6 bis t7. Erst zum Zeitpunkt t7 wird der Schaltbefehl zur Rückschaltung, Bezugzeichen 38 in Fig. 4A, ausgegeben. Dadurch wird das Druckniveau der ersten Kupplung von p1 nach p2 verringert. Dieses Druckniveau wird für die Haltezeit, Zeitraum t7 bis t10, beibehalten. Zum Zeitpunkt t10 wird das Druckniveau der ersten Kupplung von p2 nach p5 reduziert. Dadurch ändert sich der Verlauf der Getriebeeingangsdrehzahl nT in Richtung des neuen Synchrondrehzahlpunktes nT(1). Zum Zeitpunkt t10 wird ebenfalls die zweite Kupplung mit dem Schnellfülldruck, Druckniveau p10, beaufschlagt, gefolgt vom Fülldruck mit dem Druckniveau p11. Zum Zeitpunkt t12 ist der Synchrondrehzahlwert nT(1) erreicht. Die zweite Kupplung übernimmt am Synchronpunkt die Last von der ersten Kupplung. Die erste Kupplung kann somit vom Druckniveau p5 auf Null reduziert werden.

Zum zweiten Beispiel:

Das erfindungsgemäße Verfahren läuft bis zum Zeitpunkt t6, wie zuvor beschrieben, identisch ab. Es wird jedoch zum Zeitpunkt t4 mit dem Abschalten der zweiten Kupplung eine Zeitstufe gestartet. Diese Zeitstufe läuft bis zu einem maximalen Endwert tMAX, z. B. 2 Minuten. Jedem Zeitwert ist hierbei eine Reduktionszeit zugeordnet, um die sich die Schnellfüllzeit verringert. So ergibt sich z. B. bei einem Zeitwert von 100 msec eine Reduktionszeit von -50 msec oder bei einem Zeitwert von 200 msec eine Reduktionszeit von Null. Zwischen diesen Werten wird linear interpoliert.

Eine weitere Variante zur Berechnung der Schnellfüllzeit kann folgendermaßen realisiert sein: Jedem Zeitwert der Zeitstufe ist eine Schnellfüllzeit zugeordnet. Diese Schnellfüllzeit wird zu einer Grundschnellfüllzeit addiert; z. B. kann die Grundschnellfüllzeit 20 msec betragen. Wenn sich aus der Zeitstufe sodann 60 msec ergeben, berechnet sich die endgültige Schnellfüllzeit somit zu 80 msec.

Zum Zeitpunkt t6 wird der erneute Schaltbefehl zur Rückschaltung, Bezugszeichen 39 in Fig. 4A, ausgegeben. Dies bewirkt, daß das Druckniveau der ersten Kupplung auf das Druckniveau p5 reduziert wird. Die Haltezeit wurde in diesem Fall somit zu Null berechnet. Ebenfalls gleichzeitig wird die zweite Kupplung mit Schnellfülldruck, Druckniveau p10, befüllt. Der Zeitraum für die Schnellfüllung, hier t6 bis t6A, ist hierbei eine Funktion der Werte der Zeitstufe. In der Praxis bedeutet dies, daß kleinere Werte der Zeitstufe eine kurze Schnellfüllzeit bewirken. Im Extremfall kann die Schnellfüllzeit auch Null sein, wenn nämlich aufgrund der Zeitstufe erkannt wird, daß die abschaltende Kupplung noch nicht entleert ist. Im Zeitraum t6A bis t9 wird die zweite Kupplung mit Fülldruck p11 beaufschlagt. Zum Zeitpunkt t9 ist der Synchrondrehzahlwert nT(1) erreicht und das Druckniveau der zweiten Kupplung wird auf den Wert p9 erhöht, so daß diese die Last von der ersten Kupplung sicher übernehmen kann. Ebenfalls im Zeitpunkt t9 wird die erste Kupplung, Bezugszeichen 43, auf Null reduziert. Zum Zeitpunkt t12 ist die Schaltung beendet, d. h., das Druckniveau der zweiten Kupplung wird auf das Druckniveau außerhalb der Schaltung verringert.

Wie in Fig. 4B dargestellt, ergibt sich bei Anwendung des erfindungsgemäßen Verfahrens ein Zeitvorteil ∆t, Zeitraum t9 bis t12, gegenüber dem Verfahren gemäß dem Stand der Technik, Bezugszeichen 40. Mit anderen Worten: Nach einer Hochschaltung wird die Rückschaltung unmittelbar ohne Zeitversatz ausgeführt. Zwischen dem Fahrerwunsch und der tatsächlichen Beschleunigung beim Überholungsvorgang tritt eine sehr geringe Zeit auf, die Spontanität des Getriebes wurde somit erhöht.

Bezugszeichen

| | |
|---|---|
| 1 | Brennkraftmaschine |
| 2 | Automatgetriebe |
| 3 | elektronisches Motorsteuergerät |
| 4 | hydraulisches Steuergerät |
| 5 | elektronische Getriebesteuerung |
| 6 | Antriebswelle |
| 7 | hydrodynamischer Wandler |
| 8 | Pumpenrad |
| 9 | Turbinenrad |
| 10 | Leitrad |
| 11 | zusammengesetztes Planetenschaltgetriebe |
| 12 | Differential |
| 13A | Achshalbwellen |
| 13B | Achshalbwellen |
| 14 | Micro-Controler |
| 15 | Speicher |
| 16 | Funktionsblock Steuerung Stellglieder |
| 17 | Funktionsblock Berechnung |
| 18 | Getriebeeingangsdrehzahl |
| 19 | Getriebeausgangsdrehzahl |
| 20 | Eingangsgrößen |
| 21 | Datenleitung |
| 22 | Verlauf Getriebeeingangsdrehzahl, Beispiel 1 |
| 23 | Verlauf Getriebeeingangsdrehzahl, Beispiel 2 |
| 24 | Druckverlauf abschaltende Kupplung, Beispiel 1 |
| 25 | Druckverlauf abschaltende Kupplung, Beispiel 2 |
| 26 | Druckverlauf abschaltende Kupplung, Beispiel 1 |
| 27 | Druckverlauf zuschaltende Kupplung, Beispiel 2 |
| 28 | Verlauf Getriebeeingangsdrehzahl, Beispiel 1 |
| 29 | Verlauf Getriebeeingangsdrehzahl, Beispiel 2 |
| 30 | Druckverlauf erste abschaltende Kupplung, Beispiel 1 |
| 31 | Druckverlauf zweite abschaltende Kupplung, Beispiel 1 |
| 32 | Druckverlauf erste zuschaltende Kupplung, Beispiel 1 |
| 33 | Druckverlauf zweite zuschaltende Kupplung, Beispiel 1 |
| 34 | Druckverlauf erste abschaltende Kupplung, Beispiel 2 |
| 35 | Druckverlauf zweite abschaltende Kupplung, Beispiel 2 |
| 36 | Druckverlauf erste zuschaltende Kupplung, Beispiel 2 |
| 37 | Druckverlauf zweite zuschaltende Kupplung, Beispiel 2 |
| 38 | Schaltbefehl, Beispiel 1 |
| 39 | Schaltbefehl, Beispiel 2 |
| 40 | Verlauf Getriebeeingangsdrehzahl, Beispiel 1 |
| 41 | Verlauf Getriebeeingangsdrehzahl, Beispiel 2 |
| 42 | Druckverlauf der ersten Kupplung, Beispiel 1 |
| 43 | Druckverlauf der ersten Kupplung, Beispiel 2 |
| 44 | Druckverlauf der zweiten Kupplung, Beispiel 1 |
| 45 | Druckverlauf der zweiten Kupplung, Beispiel 2 |

**Patentansprüche**

1. Verfahren zur Erhöhung der Spontanität eines elektro-hydraulisch gesteuerten Automatgetriebes (2), bei dem eine Schaltung von einer ersten Übersetzungsstufe in eine zweite Übersetzungsstufe im Sinne einer Rückschaltung ausgeführt wird, indem eine erste Kupplung öffnet und eine zweite Kupplung schließt, hierbei eine elektronische Getriebesteuerung (5) über elektromagnetische Stellglieder den Druckverlauf der ersten und zweiten Kupplung steuert, dadurch **gekennzeichnet**, daß mit Ausgabe des Schaltbefehls das Druckniveau der ersten Kupplung von einem ersten Druckniveau (p1) auf ein zweites Druckniveau (p2) reduziert wird, das zweite Druckniveau (p2) während einer Haltezeit (tHALT) beibehalten wird, hierbei die Haltezeit (tHALT) eine Funktion einer Drehzahldifferenz (d_nT) einer Getriebeeingangsdrehzahl (nT) und einer Temperatur des Hydraulikfluids (Θ) darstellt (tHALT = f(d_nT, Θ)), mit Ablauf der Haltezeit (tHALT = Null) das Druckniveau der ersten Kupplung auf ein drittes Druckniveau (p3) für eine Regelzeit (tREGEL) reduziert wird, hierbei das dritte Druckniveau (p3) den Getriebeeingangsdrehzahl-Verlauf (nT) bestimmt und mit Ablauf der Regelzeit (tREGEL = Null) das Druckniveau der ersten Kupplung auf Null verringert wird.

2. Verfahren nach Anspruch 1, dadurch **gekennzeichnet,** daß die Haltezeit sich in dem Sinne verändert, daß diese Null oder nahezu Null bei einer großen Drehzahldifferenz (d_nT) der Getriebeeingangsdrehzahl (nT) wird.

3. Verfahren nach Anspruch 2, dadurch **gekennzeichnet,** daß sich die Drehzahldifferenz (d_nT) aus dem Getriebeeingangsdrehzahl-Wert zum Beginn der Schaltung (nT (1)) in der ersten Übersetzungsstufe und dem Getriebeeingangsdrehzahl-Wert im Synchronpunkt der zweiten Übersetzungsstufe (nT (2)) errechnet, so daß die Beziehung gilt:

d_nT = nT(2) - nT(1).

**4.** Verfahren zur Erhöhung der Spontanität eines elektro-hydraulisch gesteuerten Automatgetriebes (2), bei dem eine Schaltung von einer ersten Übersetzungsstufe in eine zweite Übersetzungsstufe ausgeführt wird, indem eine erste Kupplung öffnet und eine zweite Kupplung schließt, hierbei eine elektronische Getriebesteuerung (5) über elektromagnetische Stellglieder den Druckverlauf der ersten und zweiten Kupplung steuert und wobei Doppelschaltungen sequentiell ausgeführt werden, dadurch **gekennzeichnet**, daß bei einer Doppelschaltung, die aus einer ersten und einer zweiten Schaltung besteht, hierbei die zweite Schaltung einer Rückschaltung entspricht, die Rückschaltung gemäß Anspruch 1 ausgeführt wird.

**5.** Verfahren nach Anspruch 4, dadurch **gekennzeichnet,** daß bei einer Doppelschaltung deren erste Schaltung eine Hochschaltung von einer ersten in eine zweite Übersetzungsstufe ist, mit Abschalten der ersten Kupplung eine Zeitstufe (tR) gestartet wird, die bis zu einer maximalen Zeit (tMAX) läuft, wobei jedem Wert der Zeitstufe (tR) eine Reduktionszeit zugeordnet ist.

**6.** Verfahren nach Anspruch 5, dadurch **gekennzeichnet,** daß eine Schnellfüllzeit (tSF) der bei der Rückschaltung zuschaltenden ersten Kupplung in Abhängigkeit der Reduktionszeit verändert wird.

**7.** Verfahren nach Anspruch 6, dadurch **gekennzeichnet,** daß die Schnellfüllzeit sich in dem Sinne verändert, daß ein kleiner Wert der Zeitstufe (tR) eine kurze Schnellfüllzeit (tSF) bewirkt.

**8.** Verfahren nach Anspruch 1 oder 4, dadurch **gekennzeichnet,** daß die Haltezeit (tHALT) zu Null berechnet wird (tHALT = 0), wenn die Drehzahldifferenz (d_nT) der Getriebeeingangsdrehzahl (nT) einen Grenzwert (GW) überschreitet (d_nT > GW).

**Claims**

**1.** Method of increasing the spontaneity of an electrohydraulically controlled automatic transmission (2) in which a shift from a first transmission step to a second transmission step in the direction of a down-shift is brought about by a first clutch opening and a second clutch closing, an electronic transmission control (5) controlling the pressure variation of the first and second clutch by means of electromagnetic actuators, characterized in that, when the shift command is issued, the pressure level of the first clutch is reduced from a first pressure level (p1) to a second pressure level (p2) and the second pressure level (p2) is maintained during a hold time (tHOLD), the hold time (tHOLD) being a function of a rotational speed difference (d_nT) of a transmission input rotational speed (nT) and a temperature of the hydraulic fluid (θ) (tHOLD = f (d_nT, θ)), with the expiry of the hold time (tHOLD = zero), the pressure level of the first clutch is reduced to a third pressure level (p3) for a recovery time (tRECOV), the third pressure level (p3) determining the variation in the transmission input rotational speed (nT) and with the expiry of the recovery time (tRECOV = zero), the pressure level of the first clutch is reduced to zero.

**2.** Method according to Claim 1, characterized in that the hold time alters in the sense that it becomes zero or almost zero, accompanied by a large rotational speed difference (d_nT) in the transmission input rotational speed (nT).

**3.** Method according to Claim 2, characterized in that the rotational speed difference (d_nT) is calculated from the value of the transmission input rotational speed at the beginning of the shift (nT (1)) in the first transmission step and the value of the transmission input rotational speed at the synchronization point of the second transmission step (nT (2)) with the result that the relationship d_nT = nT (2) - nT (1) applies.

**4.** Method of increasing the spontaneity of an electrohydraulically controlled automatic transmission (2) in which a shift from a first transmission step to a second transmission step is brought about by opening a first clutch and closing a second clutch, an electronic transmission control (5) controlling the pressure variation in the first and second clutch by means of electromagnetic actuators and double shifts being carried out sequentially, characterized in that, in the case of a double shift that comprises a first and a second shift, the second shift corresponding to a down-shift, the down-shift is carried out in accordance with Claim 1.

**5.** Method according to Claim 4, characterized in that, in the case of a double shift whose first shift is an up-shift from a first to a second transmission step, there is started with the disengagement of the first clutch a time step (tR) that extends up to a maximum time (tMAX), a reduction time being associated with each value of the time step (tR).

**6.** Method according to Claim 5, characterized in that a rapid filling time (tSF) of the first clutch to be engaged during the down-shift is altered as a function of the reduction time.

**7.** Method according to Claim 6, characterized in that the rapid filling time alters in the sense that a smaller value of the time step (tR) brings about a short rapid filling time (tSF).

8. Method according to Claim 1 or 4, characterized in that the hold time (tHOLD) is calculated as zero (tHOLD = 0) if the rotational speed difference (d_nT) of the transmission input rotational speed (tN) exceeds a limit value (GW) (d_nT > GW).

**Revendications**

1. Procédé pour améliorer la spontanéité d'une boîte de vitesses automatique (2) à commande électrohydraulique, dans lequel un passage d'un premier étage de rapport de transmission à un deuxième étage de rapport de transmission, dans le sens d'une rétrogradation, est exécuté par le fait qu'un premier embrayage se desserre et qu'un deuxième embrayage se serre, tandis qu'une commande électronique (5) de boîte de vitesses commande, par l'intermédiaire d'actionneurs électromagnétiques, la variation de la pression du premier embrayage et du deuxième embrayage, **caractérisé** en ce qu'avec l'émission de l'ordre de changement de rapport, le niveau de pression du premier embrayage est ramené d'un premier niveau de pression (p1) à un deuxième niveau de pression (p2), le deuxième niveau de pression (p2) est maintenu pendant un temps de maintien (tHALT), le temps de maintien (tHALT) représentant une fonction d'une différence de vitesse de rotation (d_nT) d'une vitesse de rotation d'entrée (nT) de boîte de vitesses et d'une température du fluide hydraulique ($\Theta$), (tHALT = f(d_nT, $\Theta$)) avec l'expiration du temps de maintien (tHALT = zéro), le niveau de pression du premier embrayage est ramené à un troisième niveau de pression (p3) pour un temps de régulation (tREGL), le troisième niveau de pression (p3) déterminant la variation de vitesse de rotation d'entrée de la boîte de vitesses (nT) et, avec l'expiration du temps de régulation (tREGEL = zéro), le niveau de pression du premier embrayage est ramené à zéro.

2. Procédé selon la revendication 1, **caractérisé** en ce que le temps de maintien varie dans un sens tel que ce temps devient nul ou presque nul en présence d'une grande différence de vitesse de rotation (d_nT) de la vitesse de rotation d'entrée de la boîte de vitesses (nT).

3. Procédé selon la revendication 2, **caractérisé** en ce que la différence de vitesse de rotation (d_nT) se calcule à partir de la valeur de la la vitesse de rotation d'entrée de la boîte de vitesses au début du changement de rapport (nT_(1)) dans le premier étage de rapport de transmission et de la valeur de la vitesse de rotation d'entrée de la boîte de vitesses au point de synchronisation du deuxième étage de rapport de transmission (nT_(2)), de sorte qu'on a la relation : d_nT = nT(2) - nT(1).

4. Procédé pour améliorer la spontanéité d'une boîte de vitesses automatique (2) à commande électrohydraulique dans lequel un changement allant d'un premier étage de rapport de transmission à un deuxième étage de rapport de transmission est exécuté par le fait qu'un premier embrayage se desserre et qu'un deuxième embrayage se serre, tandis qu'une commande électronique (5) de boîte de vitesses commande, par l'intermédiaire d'actionneurs électromagnétiques, la variation de la pression du premier embrayage et du deuxième embrayage, et que des doubles changements de rapport sont exécutés de façon séquentielle, **caractérisé** en ce que, dans le cas d'un double changement de rapport, qui est composé d'un premier et d'un deuxième changement de rapport, le deuxième changement de rapport correspondant à une rétrogradation, la rétrogradation est exécutée conformément à la revendication 1.

5. Procédé selon la revendication 4, **caractérisé** en ce que, dans le cas d'un double changement, le premier changement est un changement en montée passant d'un premier à un deuxième étage de rapport de transmission et, avec le desserrage du premier embrayage, démarre un étage de temps (tR) qui court jusqu'à un temps maximum (tMAX), un temps de réduction étant associé à chaque valeur de l'étage de temps (tR).

6. Procédé selon la revendication 5, **caractérisé** en ce qu'un temps de remplissage rapide (tSF) du premier embrayage qui se serre lors de la rétrogradation est modifié en fonction du temps de réduction.

7. Procédé selon la revendication 6, **caractérisé** en ce que le temps de remplissage rapide varie dans le sens où une petite valeur de l'étage de temps (tR) détermine un court temps de remplissage rapide (tSR).

8. Procédé selon la revendication 1 ou 4, **caractérisé** en ce que le temps de maintien (tHALT) est calculé à zéro (tHALT = 0) lorsque la différence de vitesse de rotation (d_nT) de la vitesse de rotation d'entrée de la boîte de vitesses (nT) devient supérieure à une valeur limite (GW), soit (d_nT>GW).

**Fig. 1**

P_B  P_E  P_C  P_D  P_F

Steuerung
Stellgleider
16

Berechnung

17

μC

14

Speicher

15

Fig. 2A

Fig. 2B

Fig. 2C

Fig. 2D

Fig. 3A

Fig. 3B

Fig. 3C

Fig. 3D

Fig. 3E

Fig. 3F

Fig. 3G

Fig. 4A

Fig. 4B

Fig. 4C

Fig. 4D